(19) Europäisches Patentamt / European Patent Office / Office européen des brevets

(11) **EP 3 526 648 B1**

(12) **EUROPÄISCHE PATENTSCHRIFT**

(45) Veröffentlichungstag und Bekanntmachung des Hinweises auf die Patenterteilung:
**21.06.2023   Patentblatt 2023/25**

(21) Anmeldenummer: **17817673.1**

(22) Anmeldetag: **28.11.2017**

(51) Internationale Patentklassifikation (IPC):
**G05B 19/418** (2006.01)

(52) Gemeinsame Patentklassifikation (CPC):
**G05B 19/41885;** G05B 2219/32015;
G05B 2219/32347; Y02P 90/02

(86) Internationale Anmeldenummer:
**PCT/EP2017/080631**

(87) Internationale Veröffentlichungsnummer:
**WO 2018/099901 (07.06.2018 Gazette 2018/23)**

(54) **VERFAHREN ZUR PRÜFUNG, VORRICHTUNG UND COMPUTERPROGRAMMPRODUKT**

CHECKING METHOD, DEVICE, AND COMPUTER PROGRAM PRODUCT

PROCÉDÉ DE VÉRIFICATION, DISPOSITIF ET PRODUIT PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2016   DE 102016223646**
**08.12.2016   DE 102016224457**

(43) Veröffentlichungstag der Anmeldung:
**21.08.2019   Patentblatt 2019/34**

(73) Patentinhaber: **Siemens Aktiengesellschaft**
**80333 München (DE)**

(72) Erfinder:
• **GRIMM, Stephan**
**81825 München (DE)**
• **HASELBÖCK, Alois**
**3392 Schönbühel-Aggsbach (AT)**

(74) Vertreter: **Siemens Patent Attorneys**
**Postfach 22 16 34**
**80506 München (DE)**

(56) Entgegenhaltungen:
WO-A1-2015/074871        DE-A1-102007 042 442
DE-A1-102013 214 197      DE-A1-102015 218 744
DE-B3-102008 008 500      US-A1- 2013 055 115
US-B1- 6 633 788

**Beschreibung**

Die Erfindung betrifft ein Verfahren zur Prüfung, ob ein technischer Vorgang mittels eines technischen Systems umsetzbar ist sowie eine Vorrichtung und ein Computerprogrammprodukt.

Im Zuge der Technologieentwicklung "Industrie 4.0" werden zunehmend technische Systeme, insbesondere cyber-physische Fertigungssysteme, herangezogen, welche modulare und selbst organisiert arbeitende Einheiten, etwa cyber-physische Fertigungseinheiten wie *"Smart Machines",* aufweisen, die dynamisch auf neue Anforderungen reagieren, indem sie sich selbst auf neue Weise in einen technischen Vorgang, etwa einen Fertigungsprozess, einfügen. Ausgehend von einem vorgegebenen technischen Vorgang, beispielsweise der Fertigung eines bestimmten technischen Produkts, kann sich ein Fertigungssystem aus solchen Einheiten selbstorganisiert zusammensetzen, ohne dass es dazu einer zentralen Koordinierung bedarf. US 2013/055115 A1 offenbart ein Verfahren zum Einrichten eine Benutzer-Schnittstelle für ein verteiltes Mehr-Bevollmächtigten-Steuerungssystem mit Bevollmächtigten-Ontologien. US 6 633 788 B1 offenbart ein Datenverarbeitungsverfahren zum Gewinnen einer Prozedur zum Erzeugen eines Produktes.

Vor dem Hintergrund dieser technischen Entwicklung stellt sich regelmäßig die Aufgabe, zu prüfen, ob mittels eines aktuell konfigurierten technischen Systems mit mehreren Einheiten ein gewünschter technischer Vorgang umsetzbar ist oder nicht. Insbesondere ist ein solcher technischer Vorgang eine Fertigung eines Produkts. Beispielsweise ist für die Fertigung eines Produkts mittels eines gegebenen cyber-physischen Fertigungssystems wichtig, ob das cyber-physische Fertigungssystem die für die Fertigung des Produkts benötigten Fertigungsfähigkeiten bietet. Ferner ist relevant, ob mittels der Topologie des cyber-physischen Systems alle Fertigungsschritte in der richtigen Reihenfolge eingesetzt werden können. Dabei müssen zudem die Stückliste des Produkts und der Arbeitsplan des Produkts erfüllbar sein.

Weiterhin müssen alle relevanten Produktionsbedingungen erfüllt werden können, insbesondere Lieferzeiten und/oder obere Grenzen von Transportzeiten zwischen verschiedenen cyber-physischen Fertigungseinheiten und/oder die Zugänglichkeit aller erforderliche Materialien und Werkstücke durch die jeweilige cyber-physische Fertigungseinheit.

Das Ergebnis einer solchen Prüfung ist entweder die Aussage "das Produkt ist nicht produzierbar" oder aber die Prüfung resultiert in einem detaillierten Ablaufplan des Fertigungsprozesses, welcher sämtliche Fertigungs- und Transportschritte sämtlicher Teile des endgültigen Produkts enthält. Insbesondere soll ein solcher Ablaufplan nicht nur technisch umsetzbar sein, sondern der Ablaufplan soll auch optimiert sein hinsichtlich weiterer technischer Kriterien, insbesondere hinsichtlich einer minimierten Fertigungszeit oder hinsichtlich eines minimierten Ressourceneinsatzes, vorzugsweise eines Energieeinsatzes.

Grundsätzlich ähnelt eine solche Prüfung, ob der technische Vorgang mittels des cyber-physischen Systems umsetzbar ist, einem Job-Shop-Problem oder einem Maschinenbelegungsproblem, wobei Arbeitsschritte und Werkstücke zu Maschinen in einem optimierten Ablaufplan zugeordnet werden. Es sind zahlreiche Algorithmen bekannt, die solche Maschinenbelegungsprobleme lösen. Diese Algorithmen sind entweder speziell auf solche Aufgaben zugeschnitten, oder sind Standardverfahren aus dem Bereich Operations-Research, das heißt der mathematischen Planungsrechnung, oder des Linear Programming.

Das Verfahren zur Prüfung im Sinne dieser Anmeldung soll jedoch das Maschinenbelegungsproblem in zweierlei Hinsicht erweitern: Einerseits soll nicht nur eine optimierte Zuordnung von Werkstücken zu Maschinen ermittelt werden, sondern auch ein zulässiger und optimierter Transport von Werkstücken zwischen Einheiten des technischen Systems und ggf. zu einer abschließenden Lagerung sollen mit einbezogen sein. Weiterhin soll das Verfahren prüfen, ob der technische Vorgang überhaupt mit dem technischen System umsetzbar ist. Bestehende Verfahren erfüllen diese beiden Anforderungen nicht zuverlässig: So sind speziell angepasste Verfahren nicht allgemein einsetzbar - vielmehr bedingen Änderungen und/oder Erweiterungen der zu lösenden Aufgabe häufig eine vollständige Änderung der Lösungsstrategie. Andere Verfahren scheitern häufig daran, dass sie bereits die zugrundeliegende Aufgabe, festzustellen, ob ein bestimmter technischer Vorgang überhaupt von dem technischen System umsetzbar ist, nicht lösen.

Vor diesem Hintergrund ist es daher Aufgabe der Erfindung, ein verbessertes Verfahren zur Prüfung, ob und/oder wie ein technischer Vorgang mittels eines technischen Systems umsetzbar ist, anzugeben. Ferner ist es Aufgabe der Erfindung, eine verbesserte Vorrichtung zu schaffen, mittels welcher das Verfahren umsetzbar ist.

Diese Aufgabe der Erfindung wird mit einem Verfahren zur Prüfung, ob und/oder wie ein technischer Vorgang mittels eines technischen Systems umsetzbar ist, mit den in Anspruch 1 angegebenen Merkmalen sowie mit einer Vorrichtung mit den in Anspruch 13 angegebenen Merkmalen sowie mit einem Computerprogrammprodukt mit den in Anspruch 15 angegebenen Merkmalen gelöst. Bevorzugte Weiterbildungen der Erfindung ergeben sich aus den zugehörigen Unteransprüchen, der nachfolgenden Beschreibung und der Zeichnung.

Beim erfindungsgemäßen Verfahren zur Prüfung, ob und/oder wie ein technischer Vorgang mittels eines technischen Systems mit zwei oder mehreren Einheiten mit je für den technischen Vorgang potentiell relevanten technischen Fähigkeiten umsetzbar ist, wird zumindest eine Ontologie, die das technische System sowie den technischen Vorgang beschreibt, herangezogen und es wird mithilfe dieser zumindest einen Ontologie ein Constraint-Satisfaction-Problem gebildet. Bei dem erfindungsgemäßen Verfahren werden Lösungen des Constraint-Satisfaction-Problems gesucht und, sofern eine oder mehrere Lösungen gefunden werden, eine oder mehrere, vorzugsweise sämtliche, Lösungen ausgegeben und/oder für weitere Zwecke bereitgehalten, zweckmäßig gespeichert.

Der Vorteil der Erfindung liegt in der Verknüpfung aus symbolischer Wissensrepräsentation und symbolischem Reasoning mittels Ontologien und subsymbolischen Reasoning-Techniken mit Constraint Solving zur Prüfung, ob ein technischer Vorgang mittels eines technischen Systems umsetzbar ist.

Erfindungsgemäß ist ein dynamischer Vergleich der für den technischen Vorgang erforderlichen Fähigkeiten mit den von den Einheiten des technischen Systems bereitgestellten Fähigkeiten mittels expliziter Fähigkeitsbeschreibungen in der Ontologie möglich, während heutige technische Vorgänge, insbesondere Fertigungsverfahren, häufig keine oder nur geringfügige Flexibilität aufweisen.

Ferner ist die Kombination von Ontologien und der mit ihnen verbundenen Möglichkeit eines insbesondere automatisierten Symbolic Reasonings mit der Möglichkeit des subsymbolischen Constraint Solvings auch von einer methodischen Warte neu:
Die Stärke des Constraint Solvings besteht darin, effizient subsymbolische Bedingungen, insbesondere numerische Bedingungen, zu berechnen und eine Menge von Lösungen bereitzustellen, wobei insbesondere eine in bestimmter Hinsicht optimale oder zumindest weitgehend optimierte Lösung gefunden werden soll.

Constraint Solver lassen sich heranziehen, um auf effiziente Weise optimierte Lösungen von Arbeitsgängen insbesondere in der Fertigung zu berechnen und um subsymbolische Bedingungen zu prüfen, welche potentiell komplexe numerische Rechnungen beinhalten.

Die Stärke der Logik mit Ontologien hingegen besteht darin, Schlussfolgerungen mit symbolisch repräsentiertem Wissen auf der Basis von semantischen Beschreibungen durchführen zu können.

So können Ontologien herangezogen werden um das relevante Wissen, insbesondere über Fertigungsfähigkeiten und die Anforderungen an die Produktgestaltung eines zu fertigenden Produkts, begrifflich in einer effizient handhabbaren und auswertbaren Weise mittels symbolischer Techniken zur Wissensrepräsentation bereitzuhalten.

Symbolische Reasoner, etwa in der Art von Logikeinheiten oder von rechnerbasierten Reasonern, lassen sich heranziehen, um semantische Vergleiche zwischen den von den Einheiten des technischen Systems angebotenen Fähigkeiten und den für den technischen Vorgang erforderlichen Fähigkeiten mittels logischer Schlussfolgerungen anzustellen, wobei die (potentiell) komplexen semantischen Strukturen an ontologische Fähigkeitsbeschreibungen anpassbar sind.

Erfindungsgemäß ist eine einfach zu pflegende Wissensbank eines Sachgebiets mittels Ontologien mit der effizienten Berechenbarkeit des Constraint Solvings in hybrider Weise kombinierbar, sodass zum einen die intuitive symbolische Beschreibungen von Fähigkeiten der Einheiten des technischen Systems sowie die, insbesondere rechnerisch einbeziehbaren numerischen, Bedingungen innerhalb eines einzigen Beschreibungssystems möglich und verarbeitbar sind.

Standards, welche beim rechnergestützten Umgang mit Ontologien üblich oder bekannt sind, etwa die SPARQL-Abfrage-Sprache, erlauben bei der vorliegenden Erfindung den Abruf des erforderlichen Teils des repräsentierten Wissens aus einer zentralen Wissenbank sowohl durch den symbolischen Reasoner als auch durch den Constraint Solver.

Bei dem erfindungsgemäßen Verfahren sind das technische System ein Fertigungssystem und die Einheiten des Systems Fertigungseinheiten. Gerade für Fertigungssysteme lässt sich mittels des erfindungsgemäßen Verfahrens besonders effizient prüfen, ob Änderungen zu fertigender Produkte oder von Fertigungsverfahren mittels eines bereits bestehenden Fertigungssystems möglich sind. Zudem lässt sich mittels des erfindungsgemäßen Verfahrens besonders dynamisch auf geänderte und/oder neue Anforderungen reagieren. Insbesondere lässt sich ein Fertigungsablauf mittels eines Fertigungssystems auch autonom organisieren, ohne dass es hierzu einer gesonderten menschlichen oder zentralen Koordinierung bedarf.

Zusätzlich ist das technische System bevorzugt ein Automatisierungssystem.

In einer bevorzugten Weiterbildung des erfindungsgemäßen Verfahrens wird das Constraint-Satisfaction-Problem einer Filterung eines Suchraums für Lösungen des Constraint-Satisfaction-Problems unterzogen, vorzugsweise bevor tatsächlich Lösungen gesucht werden. Auf diese Weise lässt sich der Suchraum für Lösungen hinreichend klein und somit ausreichend handhabbar halten, sodass eine effiziente Suche, vorzugsweise zur Optimierung von Gütekriterien wie insbesondere einer möglichst kurzen Fertigungs- und somit Lieferzeit, einer möglichst kostengünstigen, wenig ressourcen- und/oder energieaufwändigen, Fertigung etc. möglich ist.

Geeigneterweise erfolgt bei dem erfindungsgemäßen Verfahren die Filterung mittels Constraint-Reasonings, insbesondere mittels eines Constraint-Reasoners, und/oder mittels Semantic-Reasonings.

Vorzugsweise erfolgt bei dem erfindungsgemäßen Verfahren das Semantic-Reasoning mittels eines sematischen Reasoners, welcher die Ontologie, zumindest zum Teil, heranzieht.

Zweckmäßig umfasst bei dem erfindungsgemäßen Verfahren die mindestens eine Ontologie zwei oder mehr oder sämtliche Einheiten des Systems und/oder Fähigkeiten zu zumindest einer oder mehreren oder sämtlichen dieser Einheiten und vorzugsweise zu einer oder mehreren oder sämtlichen dieser Einheiten bestehende Bedingungen der technischen Fähigkeiten dieser Einheiten.

Geeigneterweise umfasst bei dem erfindungsgemäßen Verfahren die mindestens eine Ontologie eine Topologie des technischen Systems.

In einer bevorzugten Weiterbildung des erfindungsgemäßen Verfahrens umfasst die mindestens eine Ontologie Planungsinformationen des technischen Vorgangs, insbesondere einen Arbeitsplan und/oder eine Stückliste eines zu fertigenden Produkts.

Vorteilhaft werden bei dem Verfahren gemäß der Erfindung in einer Weiterbildung solche Lösungen des Constraint-Satisfaction-Problems gesucht, welche ein oder mehrere Güte- und/oder Optimierungskriterien optimieren, insbesondere eine Zeitdauer des technischen Vorgangs, vorzugsweise eine Fertigungszeit, und/oder ein Ressourceneinsatz, vorzugsweise ein Energieeinsatz.

Bei dem erfindungsgemäßen Verfahren umfasst das Constraint-Satisfaction-Problem mindestens einen Constraint, d.h. eine Bedingung in Form einer

Fähigkeitsübereinstimmungs-Bedingung. Fähigkeitsübereinstimmungs-Bedingung meint das Erfordernis, dass von Einheiten des technischen Systems angebotene Fähigkeiten wie Fertigungsfähigkeiten mit den für den technischen Vorgang erforderlichen Fähigkeiten übereinstimmen, sodass das technische System imstande ist, den technischen Vorgang umzusetzen.

Es versteht sich, dass unter dem Begriff "Fähigkeit" im Rahmen dieser Anmeldung vorzugsweise eine technische Fähigkeit, insbesondere eine Fertigungsfähigkeit, zu verstehen ist. Geeigneterweise umfasst bei dem erfindungsgemäßen Verfahren das Constraint-Satisfaction-Problem mindestens einen Constraint, also eine Bedingung, in Form einer kombinatorischen und/oder numerischen Konsistenz-Bedingung. Solche kombinatorischen und/oder numerischen Bedingungen oder - synonym - Konsistenz-Bedingungen bedeuten zweckmäßig, dass die von einer Einheit angebotene Fähigkeit hinsichtlich ihrer Parameter mit der vom technischen Vorgang geforderten Fähigkeit kompatibel sein muss.

Vorzugsweise umfasst bei dem erfindungsgemäßen Verfahren das Constraint-Satisfaction-Problem mindestens einen Constraint, also mindestens eine Bedingung, in Form einer Einheiten- oder Übergabe-Bedingung. Insbesondere müssen Einheiten Material, etwa Werkstücke, zur Realisierung einer vorgesehenen Abfolge von Ablaufsschritten an passende weitere Einheiten übergeben können. Auch müssen an sich zueinander inkompatible physikalische Einheiten in der Beschreibung der vom technischen Vorgang geforderten und der von Einheiten des technischen Systems angebotenen Fähigkeiten auf ein gemeinsames Einheitensystem umgerechnet werden.

Die erfindungsgemäße Vorrichtung ist zur rechnergestützten Ausführung eines erfindungsgemäßen Verfahrens wie vorhergehend beschrieben ausgebildet. Die erfindungsgemäße Vorrichtung weist eine Wissensbasis mit mindestens einer Ontologie auf, welche das technische System sowie den technischen Vorgang beschreibt. Erfindungsgemäß weist die Vorrichtung zudem einen Constraint-Satisfaction-Problem-Generator, welcher ausgebildet ist, Daten der mindestens einen Ontologie heranzuziehen und ein Constraint-Satisfaction-Problem zu generieren. Ferner umfasst die erfindungsgemäße Vorrichtung einen Constraint Solver (CON), welcher ausgebildet ist, das Constraint-Satisfaction-Problem zu lösen.

Vorzugsweise umfasst die Vorrichtung einen Filter zur Filterung eines Suchraums für Lösungen des Constraint-Satisfaction-Problems, welcher vorzugsweise einen Constraint-Reasoner und/oder einen Semantic-Reasoner aufweist.

Das erfindungsgemäße Computerprogrammprodukt ist zur Durchführung eines erfindungsgemäßen Verfahrens wie vorhergehend beschrieben ausgebildet.

Nachfolgend wird die Erfindung anhand in der Zeichnung dargestellter Ausführungsbeispiele näher erläutert.

Es zeigen:

Figur 1    das erfindungsgemäße Verfahren zur Prüfung, ob ein technischer Vorgang mittels eines technischen System mit mehreren Einheiten umsetzbar ist, in einem Verlaufsplan in schematischer Darstellung,

Figur 2    eine Darstellung der Ontologie des technischen Systems und des technischen Vorgangs gem. Fig. 1 in Gestalt einer Fertigung eines Produkts schematisch in einem Klassen-Diagramm kompatibel zur Modellierungssprache UML (Unified Modelling Language) sowie

Figur 3    eine Stückliste sowie einen Arbeitsplan des Produkts des technischen Vorgangs gemäß Figur 2 schematisch in einem Klassendiagramm.

In den nachfolgend dargestellten Ausführungsbeispielen bildet der technische Vorgang eine Fertigung eines Produkts und das technische System ist ein cyber-physisches Fertigungssystem mit einer Vielzahl von cyber-physischen Fertigungseinheiten, welche jeweils Fertigungsfähigkeiten zur Produktfertigung aufweisen.

Grundsätzlich kann in weiteren, nicht eigens dargestellten Ausführungsbeispielen das technische System auch ein Automationssystem sein. Die Ausführungen des hier erläuterten Ausführungsbeispiels gelten für solche Systeme in entsprechender Weise.

Fraglich ist im vorliegenden Ausführungsbeispiel, ob - und gegebenenfalls wie - ein neues technische Produkt mit dem vorgegebenen cyber-physischen Fertigungssystem, d.h. mittels dessen cyber-physischen Fertigungseinheiten, gefertigt werden kann.

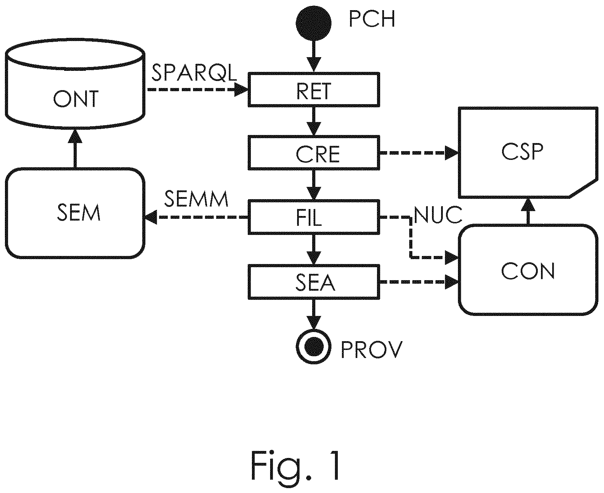

Zur Beantwortung dieser Frage wird das erfindungsgemäße Verfahren wie in Figur 1 dargestellt ausgeführt: Eine Prozessplanungseinrichtung (nicht explizit gezeigt) startet das erfindungsgemäße Verfahren zur Prüfung, ob der technische Vorgang mittels des technischen Systems umsetzbar ist, mittels eines Startsignals PCH.

Wie bereits oben erwähnt ist im gezeigten Ausführungsbeispiel der technische Vorgang die Fertigung eines Produkts, wobei das technische System ein cyber-physisches Fertigungssystem ist. Das Wissen über dieses cyber-physische Fertigungssystem wird als *digitaler Zwilling* bereitgehalten. Dazu ist das cyber-physische Fertigungssystem mittels einer Ontologie ONT digital beschrieben. Diese Ontologie ONT hält das Wissen zu sämtlichen cyber-physischen Fertigungseinheiten, deren jeweilige Fertigungsfähigkeiten, sowie die Produktdaten in einer Hierarchie von Begriffen bereit, beispielsweise der Art von hierarchischen Subsumptionen: So umfasst der Begriff "Zusammenbauen" den Begriff "Befestigen", dieser wiederum den Begriff "Anpressen", welcher wiederum den Begriff "Anschrauben" umfasst. Weiterhin sind solchen Begriffen zudem Eigenschaften und Bedingungen zugeordnet. Die Arten solcher Begriffe sowie ihre Instanzen (also die jeweiligen cyber-physischen Fertigungseinheiten oder die jeweiligen Werkstücke in ihrem jeweils gegenwärtigen Zustand) bilden gemeinsam mit ihren jeweiligen Eigenschaften und jeweiligen Bedingungen den *digitalen Zwilling* des cyber-physischen Fertigungssystems aus.

Nach dem Start des erfindungsgemäßen Verfahrens wird in einem Verfahrensschritt RET mittels Abrufs, beispielsweise mittels SPARQL-Anfragen, ein Datensatz aus der Ontologie ONT sowohl des cyber-physischen Fertigungssystems mit seinen cyber-physischen Fertigungseinheiten als auch der Stückliste und des Arbeitsplans BOP des zu fertigenden Produkts angefordert. Der daraufhin erhaltene Datensatz enthält alle cyber-physischen Fertigungseinheiten des cyber-physischen Fertigungssystems, deren jeweilige Fertigungsfähigkeiten sowie die Bedingungen CST, denen die Fertigungsfähigkeiten unterliegen, die Topologie des cyber-physischen Fertigungssystems, insbesondere die "ist verbunden mit"-Relationen zwischen einander benachbarten und/oder miteinander in Verbindung stehenden cyber-physischen Fertigungseinheiten CPPU, sowie die Stückliste BOM und dem Arbeitsplan BOP des zu fertigenden Produkts.

In einem Schritt CRE wird ein Constraint-Satisfaction-Problem CSP aus diesem Datensatz modelliert. Dabei wird das Constraint-Satisfaction-Problem CSP in der Sprache des heranzuziehenden Constraint-Solvers formuliert. Dazu kommt beispielsweise als Sprache MiniZinc zum Einsatz.

Der Suchraum zur Suche nach einer Lösung des Constraint-Satisfaction-Problems CSP wird mittels des Verfahrensschritts FIL einer Filterung unterzogen: Der Suchraum weist die Struktur eines Suchbaums auf. Bei der Filterung werden dabei solche Zweige des Suchbaums, welche erkennbar nicht zu einer Lösung führen können, vor einer weiteren Suche innerhalb dieses Zweiges entfernt. Beispielsweise sind cyber-physische Fertigungseinheiten, welche einen bestimmten Fertigungsschritt nicht ausführen können - etwa weil Bedingungen, denen die jeweilige Fertigungsfähigkeit der cyber-physischen Fertigungseinheit unterliegt, die Ausführung des aktuell benötigten Fertigungsschritts nicht in der beabsichtigten Weise erlauben - aus einer weiteren Suche für diesen Fertigungsschritt entfernt. Damit reduziert die Filterung FIL den zu durchsuchenden Suchraum.

Der zu einer solchen Filterung FIL erforderliche Abgleich besteht aus zwei Kriterien: Erstens wird ermittelt, ob die jeweils betrachtete cyber-physische Fertigungseinheit überhaupt die erforderlichen Fertigungsfähigkeiten bietet um den jeweiligen Fertigungsschritt auszuführen. Dieses Kriterium wird mittels semantischen Matchings SEMM mithilfe eines Semantic Reasoners SEM auf symbolischer Ebene geprüft.

Als weiteres Kriterium wird geprüft, ob sämtliche Konsistenzbedingungen, welche in der Ontologie ONT festgehalten sind, erfüllbar sind. Solche Bedingungen werden typischerweise mittels numerischer Bedingungen, insbesondere numerischer Intervalle, formuliert, welche mittels Constraint Propagation des Constraint Reasoners CON beantwortet werden können. Mittels des Constraint Reasoners CON werden diese numerischen Bedingungen geprüft, also numerischen Checks NUC unterzogen.

In einem Schritt SEA werden eine oder mehrere optimierte Lösungen mittels des Constraint Solvers berechnet. Dabei wird mittels eines Güte-Indikators, etwa einer Fertigungsdauer oder eines Energieeinsatzes, insbesondere zur Minimierung eines solchen Güte-Indikators, optimiert.

Mittels des Schritts PROV wird das Ergebnis der Prüfung durch eine (nicht eigens dargestellte) Benutzerschnittstelle ausgegeben. Dabei kann die Prüfung einerseits zum Ergebnis "Produkt nicht produzierbar" führen, wenn das Constraint-Satisfaction-Problem CSP nicht lösbar ist. Anderenfalls wird eine Liste der N, beispielsweise fünf, besten Lösungen als Ergebnis der Prüfung ausgegeben. Die Lösungen umfassen dabei zum einen den vollständigen Ablaufplan für die Fertigung, insbesondere eine Abfolge von Fertigungsschritten und Transportschritten.

Die vorgenannte Ontologie ONT ist wie folgt ausgestaltet: Ontologien allgemein halten Wissen zu verschiedenen Sachgebieten in einer leicht abfragbaren und verarbeitbaren Weise bereit: Ontologien umfassen dazu insbesondere begriffliche Modelle, welche Begriffe und ihre Beziehungen untereinander in einem Sachgebiet bezeichnen und erlauben eine logische Axiomatisierung der semantischen Strukturen. Für den Fall der Fertigung eines Produkts umfasst die herangezogene Ontologie die Struktur des cyber-physischen Fertigungssystems sowie produktbezogene Informationen in einer Weise, die einen Abgleich der Fertigungsfähigkeiten automatisiert erlaubt: Dazu umfasst die Ontologie folgende Begriffe:

*"Vorrichtung"* bedeutet in Ontologien vorliegend Fertigungseinheit, also ein technisches Gerät, welches eine Fertigungsfähigkeit anbietet.

Der Begriff *"Material"* umfasst alle Materialien und Produktbestandteile, etwa Einzelteile, welche mittels der Vorrichtungen auf dem Weg zum endgültigen Produkt be- und/oder verarbeitet werden.

*"Arbeitsschritt"* umfassen einen oder mehrere Fertigungsschritte, welche zur Umsetzung eines Arbeitsplans zur Fertigung des Produkts erforderlich sind.

*"Fertigungsfähigkeiten"* umfassen Fähigkeiten der Vorrichtungen, welche ausdrücklich beschrieben und zur Fertigung im cyber-physischen Fertigungssystem angeboten oder bereitgestellt werden oder zur Abarbeitung eines Arbeitsschritts erforderlich sind.

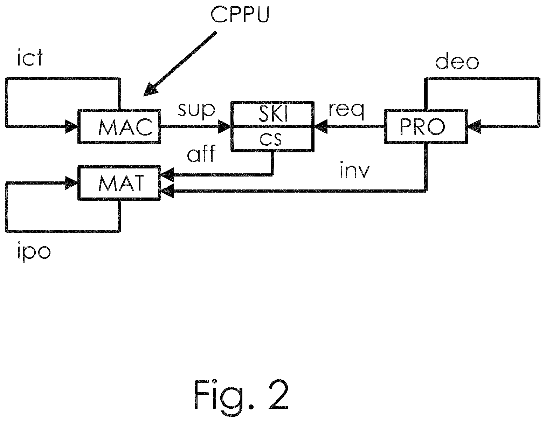

Das in Figur 2 dargestellte Klassendiagramm umfasst Klassen zu den vorgenannten ontologischen Begriffen sowie ihre ontologischen Beziehungen, d.h. Relationen, miteinander und sind ausgedrückt in der Unified Modelling Language UML.

Der Begriff einer Fertigungsfähigkeit wird in der Sprache UML mittels Relationen zu anderen Begriffen beschrieben: So wird eine Fertigungsfähigkeit unterstützt durch bestimmte Vorrichtungen, beispielsweise wird eine Fertigungsfähigkeit "Bohren" durch eine "Drehmaschine" unterstützt, das heißt eine Fertigungsfähigkeit steht mittels einer "wird-unterstützt-durch"-Relation zu einer oder mehreren Vorrichtungen in Beziehung. Ferner steht eine Fertigungsfähigkeit mittels einer "isterforderlich-für"-Relation mit weiteren Begriffen, etwa mit weiteren Fertigungsfähigkeiten, in Beziehung: Beispielsweise steht die Fertigungsfähigkeit "fügen", in "ist-erforderlichfür"-Relation zur Fertigungsfähigkeit "Presspassen", das heißt das Presspassen ist erforderlich für das Fügen. Ferner kann eine Fertigungsfähigkeit in einer "beeinflusst"-Relation zu bestimmten Materialien stehen: Beispielsweise beeinflusst die Fertigungsfähigkeit "Befestigen" insbesondere "Presspassen" ein Werkstück derart, dass Werkstücke zu einer einstückig handhabbaren Baugruppe gefügt werden.

In der Ontologiesprache UML können die Begriffe "Vorrichtung" auch mit "Maschine" (engl. "Machine"), "Arbeitsschritt" mit dem Begriff "Prozess" (engl. "Process") und "Fertigungsfähigkeit" mit dem Begriff "Fähigkeit" (engl. "Skill") bezeichnet sein. Der Begriff "Material" umfasst umgangssprachlich insbesondere Werkstücke und Werkstoffe.

Weiterhin können Begriffe auch selbstreferenzielle Beziehungen zu Bestandteilen oder anderen Instanzen des Begriffs aufweisen:

So können Vorrichtungen MAC wie in Fig. 2 dargestellt mit anderen Vorrichtungen MAC verbunden sein, das heißt eine "ist-verbunden-mit"-Relation ict zu anderen Vorrichtungen MAC aufweisen.

Arbeitsschritte PRO können Beziehungen zu anderen Arbeitsschritten PRO aufweisen, beispielsweise in einer Abhängigkeitsbeziehung "hängt-ab-von"-Relation deo von anderen Arbeitsschritten PRO stehen. Beispielsweise können Verfahrensschritte vom erfolgreichen Ausführen eines vorhergehenden Verfahrensschritts abhängen.

Weiterhin kann Material MAT in Form eines Werkstücks zerlegbar sein in Einzelteile, welche jeweils ebenfalls Material MAT in der Art eines Werkstücks bilden, das heißt, Material MAT kann in einer "ist-Teil-von"-Relation ipo zu weiterem Material MAT stehen.

Zudem können mit den Materialien MAT auch Fertigungsfähigkeiten SKI verknüpft sein mittels der "beeinflusst"-Relation aff, d.h. die Fertigungsfähigkeit SKI beeinflusst das Material MAT. Zudem können Arbeitsschritte PRO mit Materialien mittels der "bezieht ein"-Relation inv in Beziehung stehen, d.h. der Arbeitsschritt PRO bezieht das Material MAT mit ein. Die Fertigungsfähigkeiten SKI können zudem Bedingungen unterliegen, die etwa in Form von Zeichenketten cs beschrieben sind, unterliegen.

Weiterhin erlauben Ontologien den Aufbau von hierarchischen Klassifizierungen (Taxonomien) mittels Einordnung oder Subsumption. Eine solche Klassifizierung wird im dargestellten Ausführungsbeispiel für sämtliche vorangehend erwähnten Begriffe aufgestellt:

Insbesondere umfasst der Begriff der Vorrichtung MAC den spezielleren Fall einer Fertigungseinheit CPPU, welche als noch spezielleren Unterfall eine Transporteinheit umfasst, welche in einem noch spezielleren Fall ein Förderband sein kann. Der Begriff "Material" MAT umfasst insbesondere ein Werkstück, welches etwa als Einzelteil gebildet sein kann, welches in einem speziellen Fall als "Schraube" vorliegen kann.

Ein Arbeitsschritt PROC gliedert sich in speziellere Arbeitsschritte PROC, beispielsweise ein Fertigungsverfahren auf, welches wiederum als speziellen Unterfall ein automatisiertes Fertigungsverfahren umfasst, welches in einem noch konkreteren Unterfall ein Fügeverfahren zur Fügung zweier Werkstücke sein kann.

Fertigungsfähigkeiten SKI beispielsweise bilden den Unterfall einer Fähigkeit und umfassen ihrerseits als speziellen Unterfall die Fertigungsfähigkeit "Zusammenbau", welche in einem noch konkreteren Unterfall die Fertigungsfähigkeit "Presspassen" sein kann.

Diese Begriffe und Beziehungen zwischen diesen Begriffen wie in Figur 2 dargestellt bilden zusammen mit der vorgenannten Klassifizierungssystematik in den jeweiligen Sachgebieten eine Formalisierung des Wissens in diesen Sachgebieten und bilden eine Grundlage für einen formalisierten Vergleich von erforderlichen Fertigungsfähigkeiten SKI mit zur Verfügung gestellten Fertigungsfähigkeiten SKI des cyber-physischen Fertigungssystems.

Weiterhin wird die Ontologie ONT ergänzt durch Bedingungen, welche in einer Constraint-Satisfaction-Sprache ausgedrückt sind. Diese Bedingungen bilden jeweils kombinatorische und/oder numerische Zusatzinformationen zur ontologischen Repräsentanz der jeweiligen Fertigungsfähigkeiten SKI. Auf diese Weise wird eine vollständige Repräsentanz der zur Verfügung stehenden Fertigungsfähigkeiten SKI des cyber-physischen Fertigungssystems erhalten.

Im dargestellten Ausführungsbeispiel soll mit dem cyber-physischen Fertigungssystem ein Produkt in Form eines Spielzeugautos gefertigt werden. Dafür sieht die Stückliste des Spielzeugautos die Einzelteile "Achse", "Rad" und "Schraube" vor. Für jedes dieser Einzelteile besteht ein individueller Arbeitsplan, etwa muss die Schraube zunächst mittels einer cyber-physikalischen Fertigungseinheit in Gestalt eines 3D-Druckers (nicht explizit dargestellt) gedruckt werden. Dabei sind Form und Farbe im Arbeitsplan enthalten.

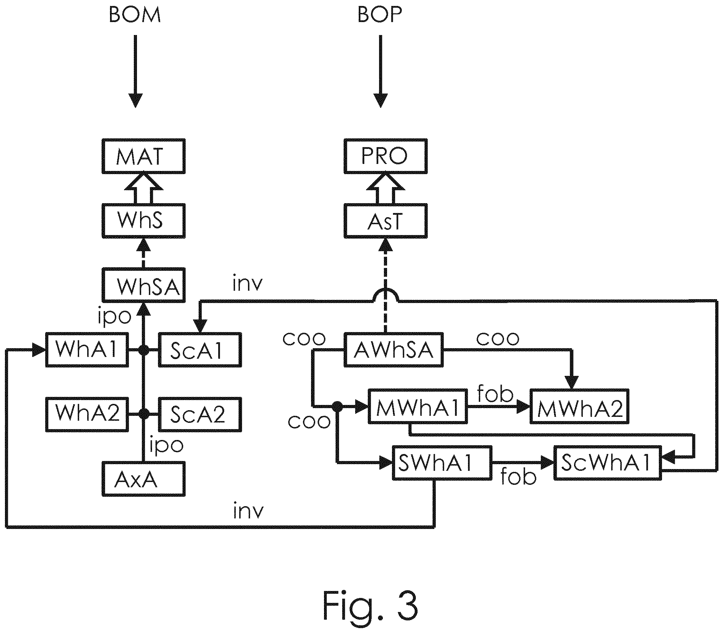

Der Zusammenbau von Schauben, Räder und Achse zu einem Radsatz ist in Fig. 3 detailliert:
Der Arbeitsplan BOP des Radsatzes umfasst als Arbeitsschritt PRO zunächst die Aufgabe "Zusammenbauen" AsT. Die Aufgabe "Zusammenbauen" AsT beinhaltet das "Zusammenbauen eines Radsatzes" als Fertigungsschritt AWhSA. Dieser Schritt AWhSA umfasst - dargestellt mit der "umfasst"-Relation coo - die Fertigungsschritte "Anbringen eines ersten Rades" MWhA1 und "Anbringen eines zweiten Rades" MWhA2, wobei letzterer dem ersten Fertigungsschritt nachfolgt und über eine "gefolgt von"-Relation fob auf den ersten Fertigungsschritt folgt.

Ferner umfasst der Fertigungsschritt AWhSA die Fertigungsschritte "erstes Rad an Achse anordnen" SWhA1 und "erstes Rad an Achse anschrauben" ScWhA1, welche vom Fertigungsschritt "Anbringen des ersten Rades" MWhA1 umfasst sind und mittels "umfasst"-Relationen coo mit diesem verknüpft sind. Zudem folgt der Fertigungsschritt ScWhA1 dem Fertigungsschritt SWhA1 mittels der "gefolgt von"-Relation fob nach.

Der Fertigungsschritt "erstes Rad anschrauben" ScWhA1 beinhaltet den Gegenstand "erste Schraube", welche mittels einer "beinhaltet"-Relation inv mit dem Fertigungsschritt ScWhA1 verknüpft ist. Zudem ist der Fertigungsschritt mit dem Gegenstand "erstes Rad" WhA1 über eine "beinhaltet"-Relation inv verknüpft.

Die vorgenannten Gegenstände sowie die Gegenstände "zweite Schraube" ScA2, "zweites Rad" WhA2 und "Achse" AxA sind Bestandteil des Einzelteils "Radsatz" WhSA und stehen mit diesem über "ist Teil von"-Relationen ipo in Beziehung. Der Gegenstand "Radsatz" WhSA ist Teil eines Eintrags WhS eines Materials MAT einer Stückliste BOM des Spielzeugautos.

Das erfindungsgemäße Verfahren zur Prüfung, ob der technische Vorgang mittels des cyber-physischen Systems umsetzbar ist, lässt sich als Constraint-Satisfaction-Problem formulieren: Konventionell umfasst ein Constraint-Satisfaction-Problem CSP Variablen, ihren jeweils zugehörigen Wertebereich sowie die für sie bestehenden Bedingungen. Im dargestellten Fall, in welchem der technische Vorgang ein Fertigungsverfahren ist, beziehen sich die Variablen auf Fertigungsschritte, wobei deren Wertebereich durch die cyber-physischen Fertigungseinheiten CPPU des cyber-physischen Fertigungssystems gegeben ist, welche Fertigungs- und Transportfähigkeiten aufweisen. Als Bedingungen werden diejenigen Beschränkungen aufgefasst, welchen eine Fertigungsfähigkeit SKI einer cyber-physischen Fertigungseinheit CPPU bei der Ausführung eines Fertigungsschritts unterliegt. Als Lösung wird eine Variablenzuordnung verstanden, bei welcher jedem Fertigungsschritt ein Wert für eine cyber-physische Fertigungseinheit CPPU zugeordnet ist, mittels welcher sämtliche Bedingungen jeweils erfüllbar sind. Im dargestellten Falle, bei welchem der technische Vorgang ein Fertigungsverfahren ist, umfasst eine Lösung eine Zuordnung jeweils einer cyber-physischen Fertigungseinheit CPPU mit einer passenden Fertigungsfähigkeit zu jedem geforderten Fertigungschritt. Bekanntermaßen ist eine solche Formulierung eines Constraint-Satisfaction-Problem CSP zahlreichen effizienten und robusten Lösungstechniken zugänglich. Solche Lösungstechniken umfassen beispielsweise Constraint Propagation, Complete Search oder Local Search.

Als Eingangsgrößen werden zur Formulierung des CSP die nachfolgend aufgelisteten Größen aus der Ontologie ONT herangezogen: Ein Datensatz S umfasst eine Matrix sämtlicher erforderlichen Fertigungsschritte, welche jeweils als ganze Zahl repräsentiert sind, sowie eine Tabelle von Parametern dieser Fertigungsschritte. So hat beispielsweise der Fertigungsschritt "Bohren" neben weiteren Parametern die Parameter "Durchmesser", "Tiefe" und "Kraft".

Ferner wird als Eingangsgröße ein Array sämtlicher cyber-physischen Fertigungseinheiten CPPU des cyber-physischen Fertigungssystems herangezogen, welche jeweils beispielsweise mit ganzen Zahlen benannt sind, sowie einen Satz von Fertigungsverfahren und Bedingungen, welche derart formuliert sind, dass sie von einem Contraint-Solver verarbeitet werden können. Solche Bedingungen können beispielsweise Parameter der Fertigungsfähigkeiten SKI sein, welche etwa als "Durchmesser $\geq$ 0,005 und Durchmesser $\leq$ 0,3" der Fertigungsfähigkeit "Bohren" vorliegen. Dies bedeutet, die cyber-physische Fertigungseinheit CPPU kann lediglich Löcher bohren, welche einen Durchmesser von mindestens 5 mm und höchstens 3 cm aufweisen. Weitere Eingangsgrößen sind gebildet durch die "ist-verbunden-mit"-Relationen ict der cyber-physischen Fertigungseinheiten CPPU miteinander, welche die Topologie des cyber-physischen Fertigungssystems festlegen. Werkstücke können in einer solchen Topologie lediglich von cyber-physischen Fertigungseinheiten CPPU zu solchen cyber-physischen Fertigungseinheiten CPPU übergeben werden, welche mittels einer "ist-verbunden-mit"-Relation ict miteinander in Verbindung stehen. Solche "ist-verbunden-mit"-Relationen ict lassen sich als gerichtete Relation ausdrücken und die Topologie des cyber-physischen Fertigungssystems kann somit als gerichteter Graph beschrieben werden.

Aus einem solchen Graphen kann eine quadratische Matrix M berechnet werden, welche die kürzesten Wege zwischen cyber-physischen Fertigungseinheiten CPPU buchhält, so dass diese kürzesten Wege während des Constraint-Solvings unmittelbar herangezogen werden können. Im gezeigten Ausführungsbeispiel bezeichnet jeder Zeilenindex und jeder Spaltenindex der Matrix M eine cyber-physische Fertigungseinheit CPPU. Demgemäß gibt der Eintrag M(i,j) der Matrix M die Entfernung des kürzesten Weges von der cyber-physischen Fertigungseinheit i zur cyber-physischen Fertigungseinheit j an. In weiteren, nicht eigens dargestellten, Ausführungsbeispielen kann die Matrix M anstelle der kürzesten Wege zwischen cyber-physischen Fertigungseinheit auch andere Performance-Indikatoren buchhalten, insbesondere die Transportzeit eines Werkstücks von der cyber-physischen Fertigungseinheit i zur cyber-physischen Fertigungseinheit j. Auch kann die Matrix M den erforderlichen Energieeinsatz zum Transport des Werkstücks von der cyber-physischen Fertigungseinheit i zur cyber-physischen Fertigungseinheit j als Einträge beinhalten. Zweckmäßigerweise bezeichnet ein Eintrag -1 der Matrix M den Umstand, dass kein Transport des Werkstücks von der cyber-physischen Fertigungseinheit i zur cyber-physischen Fertigungseinheit j möglich ist. Es gibt zahlreiche effizient umsetzbare Algorithmen, welche eine solche Matrix M kürzester Wege aus einer Anlagentopologie ableiten können. Beispielsweise ist ein solcher Algorithmus von Floyd (Floyd, Robert W.: Algorithm 97: Shortest path. Commun. ACM 5(6): 345 (1962)) bekannt.

Im gezeigten Ausführungsbeispiel wird die Variable v_step[i] herangezogen, welche einem i-ten Fertigungsschritt v_step[i] eine cyber-physische Fertigungseinheit CPPU zuordnet. Diese Variable nimmt dazu als Werte die jeweilige Nummer der cyber-physischen Fertigungseinheit CPPU aus einer fortlaufenden Aufzählung von cyber-physischen Fertigungseinheiten CPPU des cyber-physischen Fertigungssystems an. Entsprechend gibt eine Zuordnung v_step[i]=j an, dass der Fertigungsschritt mit Nummer i von einer cyber-physischen Fertigungseinheit j ausgeführt wird.

Im gezeigten Ausführungsbeispiel liegen nun konkret folgende Arten von Bedingungen vor:

Eine erste Art von Bedingungen gibt an, dass eine cyber-physische Fertigungseinheit CPPU einen bestimmten Fertigungsschritt nur dann ausführen kann, wenn die cyber-physische Fertigungseinheit CPPU die entsprechende Fertigungsfähigkeit SKI überhaupt aufweist. In der einfachsten Art kann eine solche Fertigungsfähigkeit SKI als eine Zeichenkette cs (Fig. 2) vorliegen, welche den Fertigungsschritt und die Fertigungsfähigkeit SKI der cyber-physischen Fertigungseinheit CPPU namentlich benennt, beispielsweise "Zusammensetzen". Zweckmäßig können die Fertigungsfähigkeiten der cyber-physischen Fertigungseinheiten CPPU in einer wesentlich flexibleren und semantisch komplexeren Weise buchgehalten werden, indem eine Klassifizierung (oder gleichbedeutend: Taxonomie) von Fertigungsfähigkeiten herangezogen wird. In diesem Fall kann semantisches Reasoning herangezogen werden, um einen semantischen Vergleich zwischen den benötigten Fertigungsfähigkeiten SKI und den angebotenen Fertigungsfähigkeiten SKI der cyber-physischen Fertigungseinheiten CPPU zu unternehmen. Die Vergleichsvariable Semantic_Match(v_step[i], u) nimmt den Wert "wahr" an, wenn die cyber-physische Fertigungseinheit u eine Fertigungsfähigkeit aufweist, welche sich heranziehen lässt, um den Fertigungsschritt v_step[i] auszuführen.

Im gezeigten Ausführungsbeispiel liegen ferner numerische Konsistenzbedingungen vor:

Diese numerischen Konsistenzbedingungen sind Teil der Fähigkeitsbeschreibung der jeweils betrachteten cyber-physischen Fertigungseinheit CPPU und begrenzen die Fertigungsfähigkeiten dieser cyber-physischen Fertigungseinheit CPPU weiter. Wird ein bestimmter Fertigungsschritt von der cyber-physischen Fertigungseinheit u ausgeführt, d.h. ist also der Fertigungsschritt v_step[i] von der cyber-physischen Fertigungseinheit u ausführbar, so bleiben weiterhin die engeren numerischen Konsistenzbeschränkungen zu beachten, das heißt beispielsweise im Falle der Fertigungsfähigkeit "Bohren" kann die Fertigungseinheit u etwa lediglich Löcher von mindestens 5 mm Durchmesser und höchstens 3 cm Durchmesser bohren. Solche numerischen Konsistenzbedingungen nehmen typischerweise die Form einer Gleichung oder Ungleichung an, welche zahlenmäßige Parameter enthält, insbesondere der Art "Durchmesser $\geq$ 0,005 & Durchmesser $\leq$ 0,03". Eine Auswertung dieses entsprechenden Fertigungsschritts "Bohren" des Arbeitsplans ersetzt den Platzhalter "Durchmesser" mit dem tatsächlichen Durchmesser, wie er in dem Fertigungsschritt angegeben ist. Die numerische Konsistenzbedingung kann folglich durch Auswertung eines numerischen Ausdrucks leicht und unmittelbar überprüft werden.

Weiterhin bestehen Übergabebedingungen: So lässt sich eine Stückliste BOM des Spielzeugautos als Baum beschreiben: Das Spielzeugauto besteht aus Einzelteilen, welche wiederum selbst Einzelteile aufweisen usw. Jedes Einzelteil dieses Baums erfordert eine Liste von Fertigungsschritten, welche aufeinander abfolgend ausgeführt werden müssen. Also besteht für jedes Paar von aufeinanderfolgenden Fertigungsschritten eine Arbeitsgangbedingung, welche sicherstellt, dass eine bestimmte Abfolge von Fertigungsschritten möglich ist, das heißt, dass eine Übergabe eines Werkstücks von der ersten cyber-physischen Fertigungseinheit CPPU zur zweiten cyber-physischen Fertigungseinheit CPPU möglich ist. Wenn $s_i$ und $s_j$ solche aufeinanderfolgenden Fertigungsschritte sind, lässt sich die Arbeitsgangbedingung mittels der Matrix kürzester Wege M ausdrücken als M[$s_i$, $s_j$]>0. Ähnliche Arbeitsgangbeschränkungen können von Zusammenbauschritten oder Misch-Schritten abgeleitet werden: Die jeweiligen Einzelteile, welche zusammengebaut oder Materialien, welche miteinander gemischt werden müssen, müssen zugleich zu derjenigen cyber-physischen Fertigungseinheit gelangen können, welche den Zusammenbau oder das Mischen vornimmt.

Der Einfachheit halber sollen hier weitere Bedingungen, etwa zeitliche Bedingungen (beispielsweise derart, dass der Schritt $s_i$ innerhalb von drei Minuten nach dem Ende des Fertigungsschritts $s_j$ ausgeführt werden muss) oder Volumenbedingungen für die Fertigung oder Optimierungskriterien nicht explizit berücksichtigt werden. Eine Lösung für das Constraint-Satisfaction-Problem CSP bildet einen Arbeitsplan für das mit dem cyber-physischen Fertigungssystem zu fertigende Spielzeugauto. Wenn alle cyber-physischen Fertigungseinheiten als *digitaler Zwilling* vorgehalten werden, so kann das Spielzeugauto entsprechend dem Arbeitsplan BOM gefertigt werden, welcher mittels des Constraint-Solvers berechnet worden ist.

Nachfolgend wird der Vergleich der erforderlichen Fertigungsfähigkeiten SKI mit den von den cyber-physischen Fertigungseinheiten CPPU bereitgestellten Fertigungsfähigkeiten SKI näher erläutert:

Zum in Figur 1 angegebenen Filterschritt FIL werden sowohl symbolische Reasoning-Schritte, als auch ontologische Beschreibungen von Fertigungsfähigkeiten SKI und Constraint-Solving-Strategien, mittels welchen die semantischen buchgehaltenen Fertigungsfähigkeiten SKI in den Klassifizierungen berücksichtigt werden, herangezogen. Der Suchraum des SCP wird mittels des Filterungsschritts FIL für das Problem soweit reduziert, dass der Constraint-Solver diese Aufgabe effizient erledigen kann.

An Stelle eines einfachen Vergleichs von Zeichenketten zwischen Fähigkeitsbeschreibungen des Arbeitsplans und der cyber-physischen Fertigungseinheit wird ein semantischer Vergleich, der in den Klassifizierungen (Taxonomien) buchgehaltenen Fertigungsfähigkeiten SKI vorgenommen. Im Folgenden bezeichnen $S_{req}$ einen begrifflichen Ausdruck einer in einem Arbeitsplan erforderlichen Fertigungsfähigkeit SKI und $S_{sup}$ einen begrifflichen Ausdruck einer von einer cyber-physischen Fertigungseinheit CPPU bereitgestellten Fertigungsfähigkeit SKI.

Ein Beispiel eines solchen begrifflichen Ausdrucks einer Fertigungsfähigkeit SKI ist der folgende Ausdruck, welcher in der Web Ontology Language (OWL) formulierbar ist und die Fertigungsfähigkeit "Befestigen resultierend in einem Werkstück, welches als Einzelteil eine Rundkopfschraube aufweist" beschreibt:

Fastening and
affectsResultingMaterial only
(Workpiece and inverse(isPartOf) some RoundheadedScrew).

Es wird ein Semantic Reasoner herangezogen, um zu prüfen, ob $S_{req}$ und $S_{sup}$ in spezifischen semantischen Zusammenhang miteinander stehen vor dem Hintergrund des Wissens in der Ontologie ONT. Im Falle der *Web Ontology Language* als OntologieSprache lässt sich ein sogenannter *Standard Description Logic Reasoner* heranziehen, um diese semantische Verbindung zu prüfen. Es lassen sich die folgenden semantischen Verknüpfungen heranziehen, welche zur Feststellung von Übereinstimmungen bereits an sich bekannt sind:

Zum einen lässt sich eine *Äquivalenz-Übereinstimmung* heranziehen: die Ontologie ONT beinhaltet die Äquivalenz $S_{req} \equiv S_{sup}$, das heißt die beiden Ausdrücke sind semantisch äquivalent.

Ferner lässt sich eine *Spezialisierungs-Übereinstimmung* heranziehen: Die Ontologie ONT beinhaltet die Beziehung $S_{req} \subseteq S_{sup}$, das heißt die geforderte Fertigungsfähigkeit $S_{req}$ ist ein Spezialfall der bereitgestellten Fertigungsfähigkeit $S_{sup}$.

Zudem lässt sich eine *Verallgemeinerungs-Übereinstimmung* heranziehen: Die Ontologie ONT beinhaltet den Ausdruck $S_{req} \supseteq S_{sup}$,

das heißt der Ausdruck für die geforderte Fertigungsfähigkeit $S_{req}$ ist eine Verallgemeinerung des Ausdrucks für die bereitgestellte Fertigungsfähigkeit $S_{sup}$.

Ferner besteht eine *Kompatibilitäts-Übereinstimmung*

$S_{req} \cap S_{sup}$, welche hinsichtlich der Ontologie ONT erfüllt ist, wenn der Ausdruck für die geforderte Fertigungsfähigkeit $S_{req}$ mit dem Ausdruck für die bereitgestellte Fertigungsfähigkeit $S_{sup}$ einen gemeinsamen Überlappbereich aufweist, das heißt insbesondere wenn die beiden Fertigungsfähigkeiten eine in ihren jeweiligen Ausdrücken enthaltene übereinstimmende Spezialisierung aufweisen.

Mittels einer Übereinstimmung nach einem der vorangehend beschriebenen Übereinstimmungskriterien lässt sich der Grad der Übereinstimmung festlegen, welcher vom Constraint-Solver herangezogen werden soll.

Die numerischen Bedingungen werden ebenfalls aus der Ontologie ONT abgeleitet. Die numerischen Bedingungen werden allerdings lediglich insoweit herangezogen, als sie sich auf eine einzige Variable beziehen. Insbesondere ist eine numerische Bedingung ein Wahrheitswert einer Variable für den Fertigungsschritt v (in dieser Anmeldung an anderer Stelle auch als v_step bezeichnet). Der Wertebereich der Variable v erstreckt sich auf sämtliche cyber-physischen Fertigungseinheiten CPPU des cyber-physischen Fertigungssystems. Für jede cyber-physische Fertigungseinheit u, für die die Zuordnung bei dem Fertigungsschritt v möglich ist, ist ein Ausdruck c nur dann wahr, wenn die cyber-physische Fertigungseinheit u den Fertigungsschritt v ausführen kann: Mit anderen Worten: der Ausdruck c(v |u) [d.h.: u ist v zugeordnet] ist genau dann wahr, wenn die cyber-physische Fertigungseinheit u den Fertigungsschritt v unter der Bedingung c(v) ausführen kann. Das Ergebnis *"falsch"* hingegen bedeutet, dass die cyber-physische Fertigungseinheit u kein Kandidat zur Ausführung des Fertigungsschritts v ist und folglich vom Wertebereich der Variable v des Fertigungsschritts entfernt werden kann.

Der Ausdruck c(v) ist eine Booleansche Funktion, welche numerische Ausdrücke und Operationen sowie Booleansche Operationen wie insbesondere "und" und/oder "oder" und/oder "folgt aus" und/oder "nicht" (Negation) auf Fertigungsfähigkeiten von cyber-physischen Fertigungseinheiten CPPU sowie Parametern des Spielzeugautos umfassen kann.

Beispielsweise wird die Bedingung "Die Kraft, welche von einer Zusammenbau-Fähigkeit einer cyber-physischen Fertigungseinheit CPPU (etwa einem Roboter) bereitgestellt wird, muss zumindest 10 Prozent größer sein als die Kraft, welche in einem Fertigungsschritt in Form eines Zusammenbauschritts benötigt wird" betrachtet:

Wenn $force_{sup}$ die Kraft, welche von der cyber-physischen Fertigungseinheit CPPU bereitgestellt ist bedeutet und $force_{req}$ die Kraft bedeutet, welche von dem Zusammenbauschritt gefordert wird, so bildet die Bedingung

$$force_{sup} \; >= \; force_{req} \; 1.1$$

eine wahre oder eine falsche Aussage für jede Kombination einer durch eine CPPU bereitgestellte Zusammenbaufähigkeit und eines einen Zusammenbauschritt bildenden Fertigungsschritts des Arbeitsplans BOP.

Die Filterung FIL der cyber-physischen Fertigungseinheiten CPPU aus dem Wertebereich der den Fertigungsschritt ausdrückenden Variable v wird mittels einer for-Schleife unternommen:

```
procedure numeric_match(v) {  //Numerische Prüfung für
                              //einen gegebenen
                              //Fertigungsschritt :
  for (cppu in domain(v))     //Für alle CPPU im
                              //Wertebereich von v
      for (c in constraints(cppu))
                              //Für jede Bedingung c
        if (c(v |cppu) == false)
                              //Wenn CPPU Bedingung
                              //nicht erfüllt
          remove cppu from domain(v)
                              //entferne CPPU aus dem
                              //Wertebereich von v.
  }
```

Dabei wird der oben angegebene Pseudocode nach jedem Schritt mit mittels "//" eingeleiteten umgangssprachlichen Kommentaren erläutert.

Illustrationshalber ist etwa eine Fertigungsfähigkeit eines Roboterarms U2 ($S_{sup}$) derart repräsentiert, dass ein logischer Ausdruck hinter dem ontologischen Begriff "U2_Skill" axiomatisiert, dass die cyber-physische Fertigungseinheit CPPU "U2-Roboter" die Fertigungsfähigkeit "derart schrauben, dass das resultierende Werkstück als Einzelteil einen Flachkopf von 5 Millimetern aufweist" anbietet. Umgangssprachlich bedeutet das: Die cyber-physische Fertigungseinheit CPPU "U2-Roboter" ist ein Roboter, welcher Werkstücke mittels einer Schraubeinrichtung zusammenbauen kann mithilfe eines Magazins, welches auf den spezifizierten Schraubentyp "Flachkopf" mit fester Länge abgestellt ist.

Eine im Arbeitsplan BOP geforderte Fertigungsfähigkeit für den Fertigungsschritt ScWhA1 ($S_{req}$) ist beispielsweise derart in der Ontologie ONT niedergelegt, dass der zugeordnete logische Ausdruck axiomatisiert, dass dieser Fertigungsschritt eine "Befestigung derart, dass das resultierende Werkstück als Einzelteil eine Schraube, die keine Rundkopf-Schraube ist, mit einer Länge von mindestens 5 Millimetern und höchstens 7 Millimetern" bedeutet. Regelmäßig sind im Arbeitsplan BOP die Bedingungen typischerweise weniger strikt gefasst als Bedingungen für die jeweilige Fähigkeit der cyber-physischen Fertigungseinheit CPPU.

Standard-Programmierschnittstellen oder Abfragesprachen, insbesondere SPARQL, können genutzt werden, um alle erforderlichen Daten der Ontologie ONT für die Bildung des Constraint-Satisfaction-Problems CSP heranzuziehen. Da Lösungsstrategien für Constraint-Satisfaction-Probleme CSP typischerweise optimiert sind um mit ganzen Zahlen und Aufzählungen zu arbeiten, besteht häufig der erste Schritt bei der Lösung eines Constraint-Satisfaction-Problems darin, die verschiedenen Fertigungseinheiten CPPU des Systems mit ganzen Zahlen, etwa als Index, zu bezeichnen.

Jede Variable v_Step[i] bezeichnet einen mit i nummerierten Fertigungsschritt, welchem ein ganzzahliger Wert j zugeordnet wird, der die jeweilige cyber-physische Fertigungseinheit CPPU angibt.

Zunächst wird der Wertebereich jeder v_step[i]-Variable gleich dem Satz U (sämtlicher cyber-physischer Fertigungseinheiten CPPU, d.h. sämtliche cyber-physischen Fertigungseinheiten CPPU stellen Kandidaten für den jeweiligen Fertigungsschritt dar) gesetzt.

Zusätzlich zu diesen Variablen werden Fähigkeitsbedingungen von der Ontologie ONT abgefragt, welche mit ihren jeweiligen Parameterwerten des Fertigungsschritts instanziiert werden.

Beispielsweise wird die Fähigkeit, dass eine Fertigungseinheit, etwa ein Roboter, die Fähigkeit aufweist, zwei Werkstücke mit einer Kraft miteinander zu fügen, welche zumindest 10 Prozent größer ist als die zum Zusammensetzen erforderliche Kraft, so ist die zugehörige Fähigkeitsbedingung gegeben als

$$\texttt{force}_{\texttt{CPPU}} \texttt{ >= v\_step[i].force * 1.1.}$$

Dabei steht etwa der Ausdruck v_step[i].force für die Kraft, welche für den Fertigungsschritt MWhA1 erforderlich ist. Die Parameterwerte werden aus dem Arbeitsplan BOP des Spielzeugautos entnommen.

In der Filterung FIL des erfindungsgemäßen Verfahrens werden die Wertebereiche der v_step-Variablen soweit reduziert wie möglich: Lediglich jeweils derjenige Teil des Wertebereichs soll für die weitere Durchführung des Verfahrens zur Verfügung stehen, welcher cyber-physische Fertigungseinheiten CPPU enthält, die tatsächlich ausgebildet sind, den jeweiligen Fertigungsschritt auszuführen.

Diese Reduktion des Wertebereichs - also die Filterung FIL - wird mittels zweier Schritte unternommen:
Erstens wird mittels des Semantic Reasoners SEM ein symbolischer Vergleich unternommen, um passende CPPUs aufzufinden. Dazu wird für jede erforderliche Fertigungsfähigkeit SKI aus $S_{req}$ sämtlicher als v_step ausgedrückten Fertigungsschritte und für sämtliche bereitgestellten Fertigungsfähigkeiten SKI der CPPU der Ontologie ONT ein Semantic Matching derart durchgeführt, dass die Matching-Funktion Semantic_Match(ONT, $S_{req}$, $S_{sup}$) aufgerufen wird. Sämtliche Werte des Wertebereichs, welche zu CPPUs gehören, die keine passende Fertigungsfähigkeit SKI bereitstellen können, werden aus dem Wertebereich entfernt.

Im oben beschriebenen Beispiel ist eine Subsumptions-Übereinstimmung zwischen der bereitgestellten Fertigungsfähigkeit SKI der CPPU in Gestalt des Roboters U2 mit einer geforderten Fähigkeit im Arbeitsplan BOP gegeben: Der Semantic Reasoner SEM schlussfolgert, dass die Ontologie ONT beinhaltet, dass $S_{req} \supseteq S_{sup}$, also die von der CPPU bereitgestellte Fertigungsfähigkeit ein Spezialfall der vom Arbeitsplan BOP geforderten Fertigungsfähigkeit SKI ist. Je nach Strenge des Algorithmus kann hieraus auf ein Match, also auf eine Übereinstimmung im Sinne der Subsumptions-Übereinstimmung, geschlossen werden.

Die positive Übereinstimmung in diesem Fall folgt aus der Kompatibilität der Typen von Schrauben ("flachköpfig" passt zu "nicht rundköpfig"), ihren übereinstimmenden Längen (5 Millimeter ist im Intervall von mindestens 5 Millimetern und höchstens 7 Millimetern enthalten) sowie ihrer kompatiblen Bezeichnungen in der Taxonomie der Fertigungsfähigkeiten ("*Schrauben*" ist ein Spezialfall von "*Befestigen*").

Die numerische Überprüfung wird mit dem Constraint Reasoner CON durchgeführt, um jene verbliebenen CPPUs aus dem Wertebereich der Variablen für den Fertigungsschritt auszuschließen, welche eine oder mehrere Bedingungen verletzen.

Beispiele solcher numerischen Bedingungen sind etwa physikalische Bedingungen: "Eine Fähigkeit "*Bohren*" einer bestimmten CPPU kann beispielsweise nur Löcher mit einem Durchmesser von mindestens 5 Millimetern und höchstens 3 Zentimetern in das Werkstück bohren."

Ferner können im gezeigten Ausführungsbeispiel auch Einheiten-Bedingungen herangezogen werden: Einheiten physikalischer Parameter einer Beschreibung einer Fähigkeit einer cyber-physischen Fertigungseinheit CPPU können sich von den physikalischen Einheiten einer Beschreibung eines erforderlichen Fertigungsschritts eines Arbeitsplans BOP unterscheiden. Werden solche Einheiten in einem Ausdruck für eine Bedingung verwendet, so sollten die einheitsbehafteten Größen in ein gemeinsames Einheitensystem umgerechnet werden, etwa in SI-Einheiten.

Zudem lassen sich im gezeigten Ausführungsbeispiel auch räumliche Bedingungen einsetzen: Beispielsweise kann eine quaterionische Algebra eingesetzt werden, welche sich effizient für 3D-Repräsentationen und Orientierungen in der in der Fertigung relevanten Roboter-Kinematik eignet. Die räumliche Beschreibung (lineare Translation und angulare Rotation) des Aktors eines Roboter-Manipulators bezüglich eines festen Bezugskoordinatensystems kann mittels Quaternionen auf sehr angepasste Weise erfolgen. Die Start- und Endorientierung eines Zusammenbau-Fertigungsschritts kann ebenfalls mit Quaternionen ausgedrückt werden.

Nach den symbolischen und numerischen Filterungen FIL enthält der Wertebereichbereich der die Fertigungsschritte repräsentierenden Variable v_step[i] lediglich solche cyber-physischen Fertigungseinheiten CPPU, welche fähig sind, den Fertigungsschritt auszuführen.

Wenn zumindest einer der Definitionsbereiche einer Variable leer ist, ist das Constraint-Solving-Problem unlösbar, da eine cyber-physische Fertigungseinheit CPPU mit der erforderlichen Fähigkeit im cyber-physischen Fertigungssystem fehlt.

Wenn alle Variablen nicht-leere Definitionsbereiche aufweisen, so stößt eine entsprechende Suchroutine des Constraint-Reasoners CON die Suche einer oder sämtlicher Lösungen des gefilterten Constraint-Solving-Problems an.

Die meisten geläufigen Constraint-Solver bieten eine solche Suchfunktionalität. Das Ergebnis ist entweder "nicht fertigbar" (weil beispielsweise benötigte Transportverbindungen zwischen Fertigungseinheiten fehlen) oder das Ergebnis ist zumindest eine oder mehrere vollständige Zuordnungen von cyber-physischen Fertigungseinheiten CPPU zu Fertigungsschritten.

## Patentansprüche

1. Verfahren zur Prüfung, ob und/oder wie ein technischer Vorgang mittels eines technischen Systems mit mehreren Einheiten (CPPU) mit je für den technischen Vorgang potentiell relevanten technischen Fähigkeiten (SKI) umsetzbar ist, bei welchem

   das technische System ein Fertigungssystem, die Einheiten
   des Systems Fertigungseinheiten sind und
   die Fähigkeiten Fertigungsfähigkeiten bedeuten,

   - wobei mindestens eine Ontologie (ONT), welche das technische System (TES) sowie den technischen Vorgang beschreibt, herangezogen wird, und
   - wobei mithilfe der mindestens einen Ontologie (ONT) ein Constraint-Satisfaction-Problem (CSP) gebildet wird und
   - wobei Lösungen des Constraint-Satisfaction-Problems (CSP) gesucht und buchgehalten und/oder ausgegeben werden, wobei die mindestens eine Ontologie (ONT) die Einheiten (CPPU)des Systems und/oder Fähigkeiten (SKI) zu zumindest einer oder mehreren oder sämtlichen dieser Einheiten(CPPU), umfasst, wobei das Constraint-Satisfaction-Problem (CSP) mindestens einen Constraint in Form einer Fähigkeitsübereinstimmungs-Bedingung umfasst, welche das Erfordernis bedeutet, dass von Einheiten des technischen Systems angebotene Fähigkeiten mit den für den technischen Vorgang erforderlichen Fähigkeiten übereinstimmen, sodass ein dynamischer Vergleich der für den technischen Vorgang erforderlichen Fähigkeiten mit den von den Einheiten des technischen Systems bereitgestellten Fähigkeiten mittels expliziter Fähigkeitsbeschreibungen in der Ontologie möglich ist.

2. Verfahren nach dem vorhergehenden Anspruch, bei welchem das technische System ein Automationssystem ist.

3. Verfahren nach einem der vorhergehenden Ansprüche, bei welchem das Constraint-Satisfaction-Problem (CSP) einer Filterung (FIL) eines Suchraums für Lösungen des Constraint-Satisfaction-Problems (CSP) unterzogen wird, vorzugsweise bevor Lösungen gesucht werden.

4. Verfahren nach einem der vorhergehenden Ansprüche, bei welchem die Filterung (FIL) mittels Constraint Reasonings, insbesondere mittels eines Constraint Reasoners (CON), und/oder mittels Semantic-Reasonings erfolgt.

5. Verfahren nach Anspruch 4, bei welchem das Semantic Reasoning mittels eines ontologischen und/oder sematischen Reasoners (SEM) erfolgt, welcher die Ontologie (ONT), zumindest zum Teil, heranzieht.

6. Verfahren nach einem der vorhergehenden Ansprüche, bei welchem die mindestens eine Ontologie (ONT) die Einheiten (CPPU) des Systems und/oder Fähigkeiten (SKI) zu einer oder mehreren oder sämtlichen Einheiten bestehende Bedingungen der technischen Fähigkeiten (SKI) dieser Einheiten (CPPU), umfasst.

7. Verfahren nach einem der vorhergehenden Ansprüche, bei welchem die mindestens eine Ontologie (ONT) eine Topologie des technischen Systems umfasst.

8. Verfahren nach einem der vorhergehenden Ansprüche, bei welchem die mindestens eine Ontologie (ONT) Planungsinformationen des technischen Vorgangs umfasst, insbesondere einen Arbeitsplan (BOP) und/oder eine Stückliste (BOM) eines zu fertigenden Produkts.

9. Verfahren nach einem der vorhergehenden Ansprüche, bei welchem solche Lösungen des Constraint-Satisfaction-Problems (CSP) gesucht werden, welche ein oder mehrere Optimierungskriterien optimieren, insbesondere die Zeitdauer des technischen Vorgangs, vorzugsweise eine Fertigungszeit, und/oder ein Ressourceneinsatz, vorzugsweise ein Energieeinsatz.

10. Verfahren nach einem der vorhergehenden Ansprüche, bei welchem das Constraint-Satisfaction-Problem (CSP) mindestens einen Constraint in Form einer kombinatorischen und/oder numerischen Konsistenz-Bedingung umfasst.

11. Verfahren nach einem der vorhergehenden Ansprüche, bei welchem das Constraint-Satisfaction-Problem (CSP) mindestens einen Constraint in Form einer Weiterleitungsbedingung umfasst.

12. Vorrichtung, ausgebildet zur rechnergestützten Ausführung eines Verfahrens nach einem der vorhergehenden Ansprüche, aufweisend

eine Wissensbasis mit mindestens einer Ontologie (ONT), welche das technische System sowie den technischen Vorgang beschreibt,
einen Constraint-Satisfaction-Problem-Generator, welcher ausgebildet ist, Daten der mindestens einen Ontologie (ONT) heranzuziehen und ein Constraint-Satisfaction-Problem (CSP) zu generieren,
sowie einen Constraint-Solver (CON), welcher ausgebildet ist, das Constraint-Satisfaction-Problem (CSP) zu lösen.

13. Vorrichtung nach Anspruch 12, welche einen Filter (FIL) zur Filterung eines Suchraums für Lösungen des Constraint-Satisfaction-Problems (CSP) aufweist, welcher vorzugsweise einen Constraint-Reasoner (CON) und/oder einen Semantic-Reasoner (SEM) aufweist.

14. Computerprogrammprodukt, umfassend Befehle, die bei der Ausführung durch einen Computer diesen veranlassen, das Verfahren nach einem der Ansprüche 1 bis 11 auszuführen.


**Claims**

1. Method for checking whether and/or how a technical process is able to be implemented by way of a technical system having a plurality of units (CPPU) each having technical capabilities (SKI) potentially relevant to the technical process, in which

the technical system is a production system, the units of the system are production units and the capabilities mean production capabilities,

- wherein at least one ontology (ONT) that describes the technical system (TES) and the technical process is applied, and
- wherein a constraint satisfaction problem (CSP) is formed by way of the at least one ontology (ONT) and
- wherein solutions to the constraint satisfaction problem (CSP) are sought and retained and/or output,

wherein the at least one ontology (ONT) comprises the units (CPPU) of the system and/or capabilities (SKI) in relation to at least one or several or all of these units (CPPU), wherein the constraint satisfaction problem (CSP) comprises at least one constraint in the form of a capability matching condition, which means the requirement whereby capabilities offered by units of the technical system match the capabilities required for the technical process, such that a dynamic comparison of the capabilities required for the technical process with the capabilities provided by the units of the technical system is possible by way of explicit capability descriptions in the ontology.

2. Method according to the preceding claim, in which the technical system is an automation system.

3. Method according to either of the preceding claims, in which the constraint satisfaction problem (CSP) is subjected to filtering (FIL) of a search space for solutions to the constraint satisfaction problem (CSP), preferably before solutions are sought.

4. Method according to one of the preceding claims, in which the filtering (FIL) is performed by way of constraint reasoning, in particular by way of a constraint reasoner (CON), and/or by way of semantic reasoning.

5. Method according to Claim 4, in which the semantic reasoning is performed by way of an ontological and/or semantic reasoner (SEM) that at least partly applies the ontology (ONT).

6. Method according to one of the preceding claims, in which the at least one ontology (ONT) comprises the units (CPPU) of the system and/or capabilities (SKI) in relation to one or several or all of the conditions for the technical capabilities (SKI) of units that exist for these units (CPPU).

7. Method according to one of the preceding claims, in which the at least one ontology (ONT) comprises a topology of the technical system.

8. Method according to one of the preceding claims, in which the at least one ontology (ONT) comprises planning information of the technical process, in particular a work plan (BOP) and/or a part list (BOM) for a product to be produced.

9. Method according to one of the preceding claims, in which solutions to the constraint satisfaction problem (CSP) are sought that optimize one or more optimization criteria, in particular the duration of the technical process, preferably a production time, and/or a resource input, preferably an energy input.

10. Method according to one of the preceding claims, in which the constraint satisfaction problem (CSP) comprises at least one constraint in the form of a combinatorial and/or numerical consistency condition.

11. Method according to one of the preceding claims, in which the constraint satisfaction problem (CSP) comprises at least one constraint in the form of a forwarding condition.

12. Device designed for the computer-assisted execution of a method according to one of the preceding claims, having a knowledge base having at least one ontology (ONT) that describes the technical system and the technical process,

    a constraint satisfaction problem generator that is designed to apply data of the at least one ontology (ONT) and to generate a constraint satisfaction problem (CSP),
    and a constraint solver (CON) that is designed to solve the constraint satisfaction problem (CSP).

13. Device according to Claim 12, which has a filter (FIL) for filtering a search space for solutions to the constraint satisfaction problem (CSP),
    which filter preferably has a constraint reasoner (CON) and/or a semantic reasoner (SEM).

14. Computer program product comprising instructions that, when executed by a computer, prompt said computer to perform the method according to one of Claims 1 to 11.

**Revendications**

1. Procédé de vérification si et/ou de quelle manière une opération technique peut être mise en œuvre au moyen d'un système technique comportant plusieurs unités (CPPU) disposant chacune de capacités techniques (SKI) potentiellement pertinentes pour l'opération technique, dans lequel le système technique est un système de fabrication, les unités du système sont des unités de fabrication et les capacités impliquent des capacités de fabrication,

    - dans lequel on fait recours à au moins une ontologie (ONT) décrivant le système technique (TES) et le processus technique, et
    - dans lequel un problème de satisfaction de contraintes (CSP) est constitué à l'aide de l'au moins une ontologie (ONT), et
    - dans lequel des solutions du problème de satisfaction de contraintes (CSP) sont recherchées et comptabilisées et/ou émises, l'au moins une ontologie (ONT) comportant les unités (CPPU) du système et/ou des capacités (SKI) concernant au moins une ou plusieurs ou toutes ces unités (CPPU),

le problème de satisfaction de contraintes (CSP) comprenant au moins une contrainte sous forme d'une condition de correspondance de capacités, signifiant que les capacités offertes par des unités du système technique correspondent aux capacités requises pour ledit processus technique, de sorte qu'une comparaison dynamique des capacités requises pour ledit processus technique aux capacités procurées par les unités du système technique est rendue possible moyennant des descriptions de capacités explicites dans l'ontologie.

2. Procédé selon la revendication précédente, dans lequel le système technique est un système automatisé.

3. Procédé selon l'une des revendications précédentes, dans lequel le problème de satisfaction de contraintes (CSP) est soumis à un filtrage (FIL) d'un espace de recherche de solutions au problème de satisfaction de contraintes (CSP), de préférence avant que la recherche de solutions soit entamée.

4. Procédé selon l'une des revendications précédentes, dans lequel le filtrage (FIL) se fait à l'aide de raisonnements de contraintes, en particulier au moyen d'un raisonneur de contraintes (CON), et/ou moyennant des raisonnements sémantiques.

5. Procédé selon la revendication 4, dans lequel le raisonnement sémantique se fait à l'aide d'un raisonneur ontologique et/ou sémantique (SEM) qui fait recours, au moins en partie, à l'ontologie (ONT).

6. Procédé selon l'une des revendications précédentes, dans lequel l'au moins une ontologie (ONT) comporte les unités (CPPU) du système et/ou les capacités (SKI) concernant les conditions des capacités techniques (SKI) de ces unités (CPPU) existant pour une ou plusieurs ou toutes les unités.

7. Procédé selon l'une des revendications précédentes, dans lequel l'au moins une ontologie (ONT) comporte une topologie du système technique.

8. Procédé selon l'une des revendications précédentes, dans lequel l'au moins une ontologie (ONT) comporte des informations de planification de l'opération technique, notamment un programme de travail (BOP) et/ou une liste des pièces (BOM) pour un produit à fabriquer.

9. Procédé selon l'une des revendications précédentes, dans lequel on recherche des solutions au problème de satisfaction de contraintes (CSP) qui optimisent un ou plusieurs critères d'optimisation, en particulier la durée de l'opération technique, de préférence un délai de fabrication, et/ou une consommation de ressources, de préférence une consommation d'énergie.

10. Procédé selon l'une des revendications précédentes, dans lequel le problème de satisfaction de contraintes (CSP) comprend au moins une contrainte sous forme d'une condition combinatoire et/ou numérique de cohérence.

11. Procédé selon l'une des revendications précédentes, dans lequel le problème de satisfaction de contraintes (CSP) comprend au moins une contrainte sous forme d'une condition de transmission.

12. Dispositif conçu pour l'exécution assistée par ordinateur d'un procédé selon l'une des revendications précédentes, comportant une base de connaissances comprenant au moins une ontologie (ONT) décrivant le système technique et l'opération technique, un générateur de problèmes de satisfaction de contraintes conçu pour faire recours à des données de l'au moins une ontologie (ONT) et générer un problème de satisfaction de contraintes (CSP), ainsi qu'un solveur de contraintes (CON) conçu pour résoudre le problème de satisfaction de contraintes (CSP).

13. Dispositif selon la revendication 12 comportant un filtre (FIL) pour le filtrage d'un espace de recherche de solutions au problème de satisfaction de contraintes (CSP), qui comporte de préférence un raisonneur de contraintes (CON) et/ou un raisonneur sémantique (SEM).

14. Produit de programme logiciel comportant des commandes qui, lors de l'exécution par un ordinateur, amènent celui-ci à exécuter le procédé selon l'une des revendications 1 à 11 .

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013055115 A1

- US 6633788 B1

**In der Beschreibung aufgeführte Nicht-Patentliteratur**

- **FLOYD, ROBERT W.** Algorithm 97: Shortest path. Commun. ACM, 1962, vol. 5, 345